Europäisches Patentamt

European Patent Office

Office européen des brevets

(11) Numéro de publication: **0 198 726**
**A1**

## (12) DEMANDE DE BREVET EUROPEEN

(21) Numéro de dépôt: **86400295.1**

(22) Date de dépôt: **11.02.86**

(51) Int. Cl.⁴: **B60R 22/34**

(30) Priorité: **15.02.85 FR 8502230**

(43) Date de publication de la demande:
**22.10.86 Bulletin 86/43**

(84) Etats contractants désignés:
**DE GB IT SE**

(71) Demandeur: **ACIERS ET OUTILLAGE PEUGEOT Société dite:**

**F-25400 Audincourt (Doubs)(FR)**

(72) Inventeur: **Monsigny, Jean**
**30 Rue du Zornhoff**
**F-67700 Saverne(FR)**

(74) Mandataire: **Moncheny, Michel et al**
**c/o Cabinet Lavoix 2 Place d'Estienne d'Orves**
**F-75441 Paris Cedex 09(FR)**

(54) Dispositif d'entrainement d'un pène de ceinture de sécurité notamment pour véhicule automobile.

(57) Ce dispositif d'entraînement d'un pène coopérant avec une boucle de ceinture de sécurité passive notamment pour véhicule automobile, comprend en combinaison un moto-réducteur à double sens de rotation auquel sont associés des organes d'entraînement (23,24,31) d'une courroie liée au pène et des moyens (27) d'actionnement manuel de ces organes d'entraînement. Les moyens d'actionnement (27) sont solidaires en rotation d'un moyeu - (23) d'une roue dentée (24) pouvant être entraînée en rotation par une vis sans fin solidaire de l'arbre d'un moteur d'entraînement. Une roue à picots (31) est solidaire du moyeu (23) et coopère avec ladite courroie de façon à déplacer ledit pène.

FIG.4

EP 0 198 726 A1

Dispositif d'entrainement d'un pène de ceinture de sécurité, notamment pour véhicule automobile.

La presente invention concerne les dispositifs de ceinture de sécurité passive, notamment pour véhicule automobile et elle se rapporte plus particulièrement à un dispositif d'entraînement d'un pène coopérant avec une boucle solidaire d'une ceinture de sécurité, et pouvant être déplacé entre une position d'attente et une position d'assujettissement de l'utilisateur sur son siège.

On connaît dans l'état de la technique des dispositifs de ceinture de sécurité passive comprenant une sangle formant baudrier enroulée à une de ses extrémités par un enrouleur et portant à son extrémité libre une boucle qui coopère avec un pène se déplaçant dans un rail de guidage et de retenue fixé sur la carrosserie du véhicule.

Ce pène et la ceinture qui en est solidaire peuvent être déplacés entre une position d'attente permettant à un utilisateur d'accéder facilement à son siège et une position d'assujettissement où l'utilisateur à protéger est sanglé sur son siège. A cet effet, le pène est solidaire d'une courroie dans laquelle sont prévus des ajourages qui coopèrent avec une roue à picots entraînée dans les deux sens de rotation par un dispositif d'entraînement électromécanique, tel qu'un moto-réducteur à deux sens de rotation alimenté par le réseau de bord du véhicule.

Il peut arriver pour diverses raisons que le moto-réducteur soit en panne et ne puisse plus assurer le déplacement du pène. Ceci peut présenter un certain nombre d'inconvénients, notamment lorsque le pène n'est pas dans sa position d'assujettissement car la ceinture de sécurité n'assure alors aucune fonction de blocage de l'utilisateur sur son siège.

Un but de l'invention est de proposer un dispositif d'entraînement qui puisse être actionné de façon "manuelle" en cas de panne du dispositif électrique d'entraînement.

Un autre but de l'invention est de proposer un dispositif d'entraînement qui soit simple, fiable et peu coûteux pour répondre à des critères communs dans l'industrie automobile.

A cet effet, l'invention a pour objet un dispositif d'entraînement d'un pène coopérant avec une boucle de ceinture de sécurité passive, notamment pour véhicule automobile, ledit pène étant monté déplaçable dans un rail de guidage et de retenue entre une position d'attente et une position d'assujettissement d'un utilisateur sur un siège, caractérisé en ce qu'il comprend en combinaison, un moto-réducteur à double sens de rotation auquel sont associés des organes d'entraînement d'une courroie liée au pène, et des moyens d'actionnement manuel des organes d'entraînement de ladite courroie.

L'invention sera mieux comprise à l'aide de la description qui va suivre, donnée uniquement à titre d'exemple et faite en se référant aux dessins annexés, sur lesquels :

-la Fig. 1 est une vue schématique en perspective de l'habitacle d'un véhicule automobile équipé d'un dispositif de ceinture de sécurité passive;

-la Fig. 2 représente une vue en coupe d'un premier mode de réalisation d'un dispositif d'entraînement selon l'invention;

-la Fig. 3 est une vue en coupe selon un autre plan du mode de réalisation du dispositif d'entraînement représenté sur la Fig. 2;

-la Fig. 4 est une vue en coupe d'un second mode de réalisation d'un dispositif d'entraînement selon l'invention;

-la Fig. 5 est une vue en coupe d'un moyeu d'une roue dentée entrant dans la constitution d'un dispositif d'entraînement selon l'invention représenté sur la Fig. 4;

-la Fig. 6 est une vue de droite de la Fig. 5; et
-la Fig. 7 est une vue de gauche de la Fig. 5.

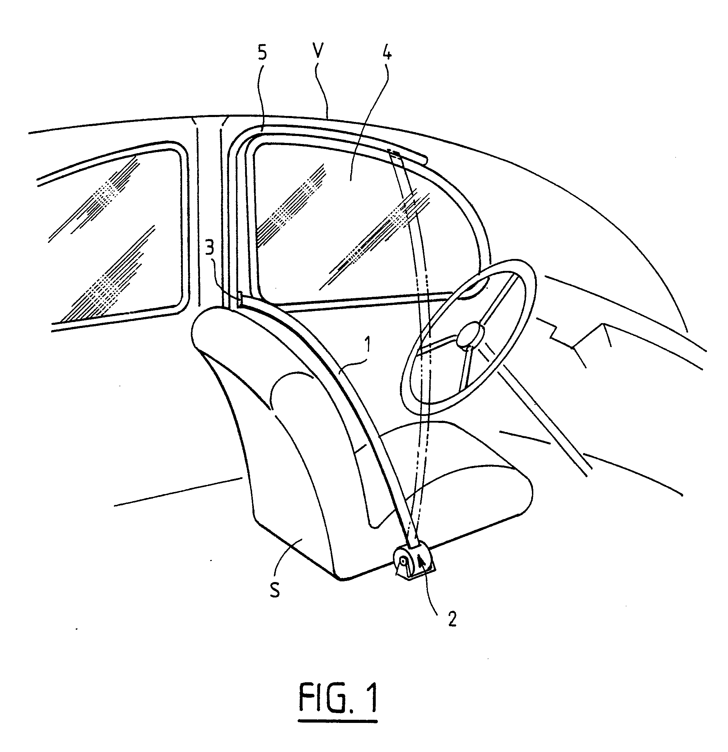

Sur la Fig. 1, on a représenté schématiquement un véhicule V dont le siège du conducteur S est équipé d'un dispositif de ceinture de sécurité passive.

La ceinture de sécurité comprend une sangle 1 formant baudrier dont une extémité est enroulée sur un enrouleur 2 disposé du côté intérieur de siège S.

A son extrémité opposée à l'enrouleur 2, la sangle 1 porte une boucle 3 qui coopère avec un pène (non représenté) se déplaçant autour d'une porte 4, dans un rail creux 5 de guidage et de retenue dont une partie est disposée contre le montant vertical de la caisse du véhicule et dont une autre partie est appuyée contre le bord extérieur du pavillon au-dessus de l'embrasure de la porte.

La sangle 1 peut être déplacée entre une position d'attente (représentée en traits mixtes) dans laquelle l'utilisateur a accès facilement au siège S et une position d'assujettissement (représentée en traits pleins) où l'utilisateur est sanglé sur son siège.

Ce déplacement est assuré, comme nous le verrons ci-après, par un moto-réducteur qui entraîne dans les deux sens de rotation, une roue comportant des picots qui coopèrent avec des ajourages d'une courroie solidaire du pène se déplaçant dans le rail de guidage.

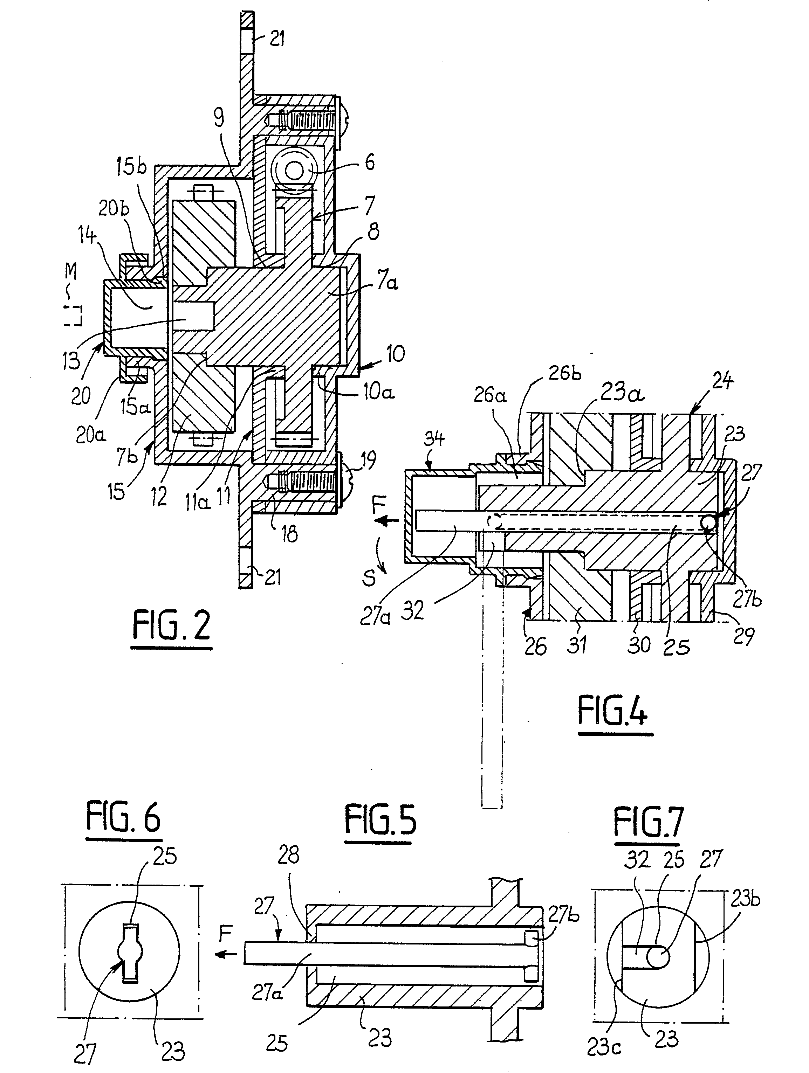

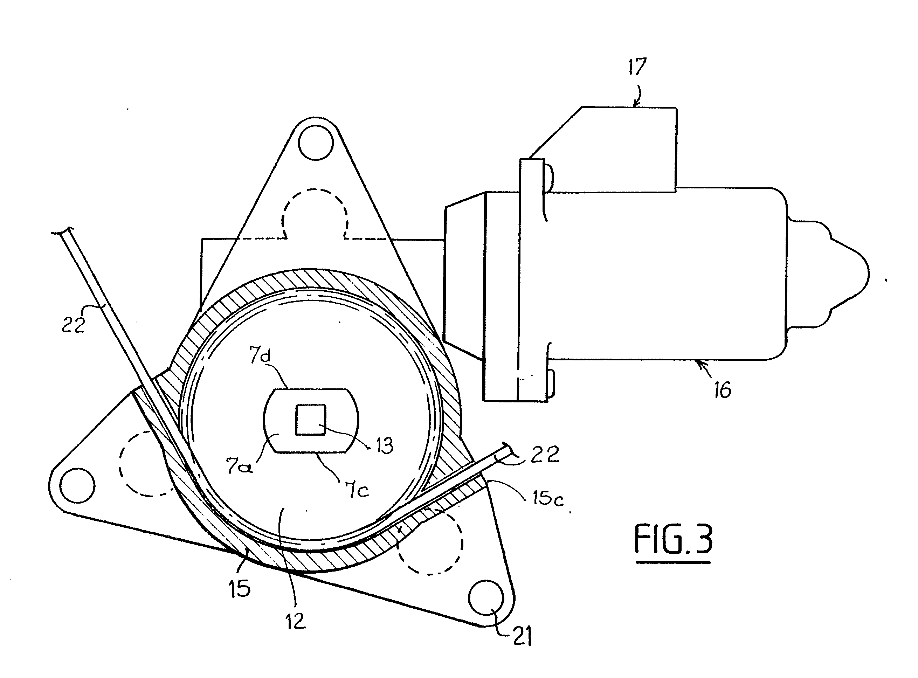

Comme on peut le voir sur la Fig. 2, une vis sans fin 6 qui est solidaire de l'arbre d'un moteur d'entraînement (non représenté) et qui peut être avantageusement venue de matière avec cet arbre, entraîne en rotation une roue dentée 7.

Cette roue dentée 7 comporte un moyeu central 7 a qui tourillonne dans des paliers 8 et 9 formés respectivement dans des flasques 10 et 11 disposés de part et d'autre du voile de la roue dentée 7.

Les flasques 10 et 11 comportent des rebords annulaires 10a et 11a respectivement, qui sont disposés de part et d'autre du voile de la roue de façon à maintenir la roue dentée 7 en position.

Une partie du moyeu 7a fait saillie à l'extérieur du carter formé par les flasques 10 et 11, à travers un évidement annulaire ménagé dans le flasque 11 au niveau du palier 9.

Cette partie de moyeu présente un épaulement 7b venant coopérer avec un alésage de forme correspondante ménagé dans une roue à picots 12 destinée à l'entraînement d'une courroie solidaire du pène mobile (non représentés).

L'extrémité de cette partie du moyeu 7a comporte deux méplats venant s'emboîter dans une forme correspondante de la roue à picots, de façon à assurer la transmission du mouvement de rotation de la vis sans fin 6, à la roue à picots 12.

Ainsi qu'on peut le voir plus clairement sur la Fig. 3, le moyeu 7a comporte deux méplats 7 c et 7d diamétralement opposés, venant s'emboîter dans la roue à picots 12.

Si l'on considère maintenant les Fig. 2 et 3, on constate qu'un évidement 13 qui peut avantageusement être de section carrée, est ménagé dans l'extrémité de la partie du moyeu 7a voisine de la roue à picots 12.

Cet évidement 13 est disposé en regard d'un passage 14 ménagé dans un organe de support 15 sur lequel est fixé et centré l'ensemble moto-réducteur constitué, comme on peut le voir sur la Fig. 3, par un moteur d'entraînement 16 comportant un connecteur de raccordement électrique 17.

Ainsi qu'on peut le voir sur la Fig. 2, la fixation de ce moto-réducteur est assurée par des bossages 18 de l'organe de support 15, venant se loger dans des alésages prévus à cet effet dans les flasques 10 et 11 et dans lesquels sont disposées des vis 19.

Au niveau du passage 14, l'organe de support 15 présente un rebord annulaire 15 a faisant saillie vers l'extérieur.

Un dispositif d'obturation 20 est assemblé par élasticité sur le rebord 15a de l'organe de support 15 de façon à obturer le passage 14. Ce dispositif d'obturation 20 se présente en coupe, sous la forme générale d'un U comportant un élément annulaire rajouté 20a, en forme de L.

Ce dispositif d'obturation 20 comporte également un bossage annulaire 20b coopérant avec un évidement annulaire 15b de l'organe de support 15 prévu sur le rebord 15a de façon à maintenir en position le dispositif d'obturation.

L'organe de support 15 comporte également des perçages 21 destinés à la fixation de l'ensemble ainsi réalisé sur la carrosserie du véhicule.

Si l'on se reporte maintenant à la Fig. 3, on constate que le moteur d'entraînement 16 qui peut être un moteur de type classique par exemple un moteur à inducteur à aimant permanent à double sens de rotation, entraîne comme on l'a vu la roue à picots 12 par l'intermédiaire de la vis sans fin, de la roue dentée et des méplats 7c et 7d du moyeu 7a. Les picots de la roue 12 engrènent avec des ajourages de forme correspondante, d'une courroie 22 solidaire du pène mobile.

Ainsi qu'on peut le voir sur cette Fig. 3, l'organe de support 15 présente au niveau de l'orifice d'entrée de la courroie dans le dispositif d'entraînement, une surface plane 15c sensiblement perpendiculaire au trajet de la courroie 22 de sorte que cette surface plane 15c constitue une surface de butée pour tout dispositif de limitation de course monté sur la courroie 22 de façon fixe ou réglable.

En fonctionnement normal comme on l'a déjà vu, le moteur d'entraînement 16 assure le déplacement de la courroie 22 et donc du pène qui en est solidaire. Cependant, en cas de panne du dispositif électrique, il est indispensable que l'utilisateur puisse déplacer le pène de façon "manuelle".

Selon le mode de réalisation représenté aux Fig.2 et 3, on agit sur le moyeu 7a au moyen d'une manivelle M (Fig.2) dont une extrémité est introduite dans l'évidement 13 du moyeu 7aà travers le passage 14 de l'organe de support 15 après avoir enlevé le dispositif d'obturation 20. Cette extrémité de la manivelle a donc une forme adaptée pour coopérer avec l'évidement 13 de façon à entraîner en rotation le moyeu 7a.

Pour ce faire, il est obligoire que le couple roue dentée 7/ vis sans fin 6, soit reversible, c'est à dire que l'angle d'hélice β est supérieur à l'angle de frottement, ce qui est obtenu pour β = 12°, par exemple. Il va de soi que de nombreuses combinaisons sont possibles.

Pour rester dans le même diamètre d'arbre moteur, donc de vis sans fin 6, il faut que cette vis comporte plusieurs filets. On peut citer à titre d'exemple, les combinaisons du tableau suivant.

TABLEAU

| Angle d'hélice $\beta$ | Module réel Mr | Nbre Filets n | Nbre dents roue(7) Z | Rapport $\dfrac{Z}{n}$ | Ø noyau vis (6) | Ø ext. vis (6) |
|---|---|---|---|---|---|---|
| 16°50'57" | 0,5 | 4 | 113 | 28,25 | 5,65 | 7,9 |
| 21°14'34" | 0,5 | 5 | 110 | 22 | 5,65 | 7,9 |
| 15°21'58" | 0,6 | 3 | 95 | 31,66 | 5,25 | 7,9 |
| 14°42'45" | 0,8 | 2 | 72 | 36 | 4,3 | 7,9 |
| 22°23'34" | 0,8 | 3 | 68 | 22,66 | 4,3 | 7,9 |
| 30°31'35" | 0,8 | 4 | 64 | 16 | 4,3 | 7,9 |
| 17°55'13" | 1 | 2 | 56 | 28 | 4 | 7,9 |
| 27°29'11" | 1 | 3 | 52 | 17,33 | 4 | 7,9 |
| 37°58'48" | 1 | 4 | 46 | 11,5 | 4 | 7,9 |

Dans ce cas, le mouvement de rotation imprimé à la manivelle M par un utilisateur, est transmis au moyeu 7 a par l'intermédiaire des formes complémentaires de l'extrémité de la manivelle M et de l'évide-ment 13 qui entraînent en rotation la roue à picots 12 et donc la courroie 22 solidaire du pène, de même que la roue dentée 7, la vis sans fin 6 et donc l'arbre du moteur d'entraînement 16.

Selon un autre mode de réalisation représenté sur la Fig.4, un moyeu 23 d'une roue dentée 24 est muni d'un canal 25 disposé en regard d'un passage 26a ménagé dans un organe de support 26.

Un organe d'actionnement 27 se présentant sous la forme d'un T est monté coulissant dans le canal 25.

Comme on peut le voir plus clairement sur la Fig.5, l'organe d'actionnement 27 comporte une tige centrale cylindrique 27a à une des extrémités de laquelle s'étend approximativement à angle droit une traverse cylindrique 27b qui est solidaire de la tige centrale 27a et qui coopère avec le canal 25 de façon à rendre solidaire en rotation l'organe d'actionnement 27 et le moyeu 23.

Le canal 25 comporte un fond 28 dans lequel est ménagé un orifice pour le coulissement de la tige cylindrique 27a.

On peut voir sur la Fig.6 que le canal 25 dans lequel coulisse l'organe d'actionnement 27, est de forme aplatie et comporte un renflement central semi-cylindrique.

Si l'on revient à la Fig.4, on constate que la partie du moyeu 23 s'étendant hors du carter constitué par des flasques 29 et 30, comporte un épaulement 23a coopérant avec un évidement de forme correspondante d'une roue à picots 31.

Ainsi qu'on peut le voir sur la Fig.7, cette partie du moyeu 23 comporte également deux méplats 23b et 23c venant s'emboîter dans des parties de forme correspondante de la roue à picots 31 de façon à assurer la transmission du mouvement de rotation d'un arbre d'un moteur d'entraînement - (non représenté), à la roue àpicots 31.

L'extrémité de cette partie du moyeu s'étendant au-delà d'un rebord annulaire 26b définissant le passage 26a de l'organe de support 26 comporte également une ouverture radiale 32 communiquant avec l'orifice ménagé dans le fond 28 et s'étendant vers le méplat 23c.

Un dispositif d'obturation 34 est disposé de la même manière que le dispositif d'obturation du mode de réalisation précédent sur le rebord 26b de l'organe de support. Il est à noter que la tige centrale cylindrique 27 a de l'organe d'actionnement 27 fait saillie au-delà du moyeu 23.

L'extrémité du moyeu 23 fait également saillie au-delà du rebord 26b de l'organe de support 26, d'une longueur suffisante pour que le fond de l'ouverture radiale 32 soit également disposé au-delà du rebord 26b.

Dans sa position escamotée, l'organe d'actionnement 27 est donc disposé à l'intérieur du canal 25 et le jeu séparant l'extrémité du moyeu 23 dans laquelle débouche le canal 25 et la partie du flasque 29 disposée en regard de ce canal, est inférieur au diamètre de la traverse 27b de l'organe d'actionnement de manière que celui-ci soit maintenu dans le canal.

En cas de panne, après avoir enlevé le dispositif d'obturation 34, l'utilisateur peut saisir l'extrémité de l'organe d'actionnement 27 faisant saillie au-delà du moyeu 23, le faire coulisser dans le sens indiqué par la flèche F sur les Fig.4 et 5, de façon à amener la traverse 27b de l'organe d'actionnement 27 en contact avec le fond 28 du canal 25, faire pivoter comme on l'a représenté sur la Fig.4, cet organe d'actionnement 27 suivant le sens indiqué par la flèche S, de manière que l'organe d'actionnement 27 se trouve dans une position active sensiblement à angle droit par rapport à l'axe du moyeu 23.

L'ouverture radiale 32 d'axe sensiblement perpendiculaire au plan du canal 25 permet le déplacement angulaire de l'organe d'actionnement et participe à son maintien dans sa position active.

L'utilisateur dispose alors d'une manivelle de secours lui permettant, en agissant sur l'organe d'actionnement 27, de faire tourner le moyeu 23, la roue à picots 31 ainsi que la roue dentée 24 et l'arbre du moteur (non représenté).

Il va de soi que la partie non décrite du dispositif est la même que dans le mode de réalisation précédent.

Dans ce mode de réalisation, le couple roue dentée/vis sans fin est également reversible, c'est à dire que l'angle d'hélice $\beta$ est également supérieur à l'angle de frottement.

Ainsi, à partir d'un moto-réducteur à roue dentée et vis sans fin, destiné par exemple à l'entraînement d'un lève-vitre électrique, on assure l'entraînement du pène mobile d'une ceinture de sécurité passive par l'intermédiaire d'une courroie comportant des ajourages coopérant avec une roue à picots.

Ce dispositif comporte comme on l'a vu des moyens d'actionnement manuel permettant de déplacer le pène mobile notamment en cas de panne du dispositif électrique.

L'entraînement de la roue dentée par la vis sans fin se fait donc par un engrènement à contact ponctuel, suffisant pour assurer la fonction d'une façon économique et répondre ainsi à des critères communs dans l'industrie automobile.

Ce dispositif d'entraînement trouve son application notamment dans l'industrie automobile.

**Revendications**

1. Dispositif d'entraînement d'un pène coopérant avec une boucle (3) de ceinture de sécurité passive notamment pour véhicule automobile, ledit pène étant monté déplaçable dans un rail (5) de guidage et et de retenue entre une position d'attente et une position d'assujettissement d'un utilisateur sur un siège (S), caractérisé en ce qu'il comprend en combinaison, un moto-reducteur à double sens de rotation auquel sont associés des organes d'entraînement d'une courroie (22) liée au pène et des moyens (13 ; 25, 27) d'actionnement manuel des organes d'entraînement de ladite courroie (22).

2. Dispositif d'entraînement selon la revendication 1, dans lequel les organes d'entraînement sont constitués par une vis sans fin (6), solidaire de l'arbre d'un moteur d'entraînement (16), cette vis sans fin engrenant avec une roue dentée (7 ; 24) dont le moyeu (7a ; 23) est solidaire en rotation d'une roue à picots (12 ; 31) coopérant avec ladite courroie (22), caractérisé en ce que les moyens d'actionnement manuel de ladite courroie sont solidaires du moyeu (7a ; 23) de la roue dentée (7 ; 24).

3. Dispositif d'entraînement selon la revendication 2, caractérisé en ce que les moyens d'actionnement manuel sont constitués par un évidement - (13) ménagé à l'extrémité du moyeu (7a) voisine de la roue à picots (12), et coopérant avec une extrémité de forme complémentaire d'une manivelle (M).

4. Dispositif d'entraînement selon la revendication 3, caractérisé en ce que la section de l'évidement - (13), est carrée.

5. Dispositif d'entraînement selon la revendication 2, caractérisé en ce que les moyens d'actionnement manuel sont constitués par un organe d'actionnement (27), coulissant dans un canal (25) ménagé dans le moyeu (23) et pouvant se déplacer entre une position dans laquelle il est, au moins en partie, logé à l'intérieur du canal (25), et une position active dans laquelle il fait saillie sensiblement à l'angle droit hors du moyeu (23).

6. Dispositif d'entraînement selon la revendication 5, caractérisé en ce que l'organe d'actionnement - (27) est constitué par une tige cylindrique (27a) à une extrémité de laquelle s'étend une traverse - (27b) coopérant avec le canal (25) de façon à rendre solidaire en rotation le moyeu (23) l'organe d'actionnement (27).

7. Dispositif d'entraînement selon les revendications 5 ou 6, caractérisé en ce que le canal (25) présente un fond (28) dans lequel est ménagé un orifice pour le coulissement de la tige (27a), cet orifice communiquant avec une ouverture radiale - (32) d'axe perpendiculaire au plan du canal (25) destinée, lorsque la traverse (27b) de l'organe d'actionnement (27) est en contact avec ledit fond (28), à permettre un déplacement angulaire de l'organe d'actionnement (27) vers une position de manivelle et le maintien de cet organe, dans cette position.

8. Dispositif d'entraînement selon l'une quelconque des revendications précédentes, caractérisé en ce qu'il est prévu au niveau de l'entrée de la courroie (22) dans le dispositif d'entraînement, une surface de butée (15c) à peu près perpendiculaire au trajet de la courroie (22) et destinée à coopérer avec tout dispositif de limitation de course monté sur ladite courroie.

FIG. 1

FIG. 2

FIG. 4

FIG. 6

FIG. 5

FIG. 7

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 345 627  (BOSCH) <br> * Page  4, lignes 16-26; figures 1,3 * | 1,2 | B 60 R  22/34 |
| A | US-A-4 436 250  (BECKER) <br> * Colonne  3, lignes 22-65; figures 1,2 * | 1,2 | |

---

DOMAINES TECHNIQUES
RECHERCHES (Int. Cl.4)

B 60 R

Le présent rapport de recherche a été établi pour toutes les revendications

| Lieu de la recherche | Date d'achèvement de la recherche | Examinateur |
|---|---|---|
| LA HAYE | 21-05-1986 | ZERI A. |